# EUROPEAN PATENT APPLICATION

(11) **EP 4 773 209 A1**
(43) Date of publication of application: **08.07.2026**
(21) Application number: 25845055.0
(22) Date of filing: 11.07.2025
(51) Int. Cl.: H01M 4/133, H01M 4/134, H01M 4/587, H01M 4/38, H01M 4/48, H01M 4/36, H01M 4/1393, H01M 4/1395, H01M 4/04

(54) **ANODE FOR LITHIUM SECONDARY BATTERY AND PREPARATION METHOD THEREFOR**

(30) Priority: 24.07.2024 KR 20240097817; 04.02.2025 KR 20250013944
(71) Applicant: LG Energy Solution, Ltd., Seoul 07335 (KR)
(72) Inventor: KIM, So Yeon, Daejeon 34122 (KR); OH, Hyun Hee, Daejeon 34122 (KR); LIM, Dong Ju, Daejeon 34122 (KR)
(74) Representative: Plasseraud IP
(86) International application number: PCT/KR2025/010177
(87) International publication number: WO 2026/023958

(57) **Abstract**

The present disclosure relates to a negative electrode and a method of manufacturing the same. The negative electrode includes a silicon-based negative electrode active material together with a carbon-based negative electrode active material, thereby having excellent charge and discharge capacity, and has characteristics of excellent rapid charging performance since a magnetic field is applied during manufacturing, thereby reducing tortuosity of an entire negative electrode active layer. In addition, the negative electrode has advantages of excellent lifespan characteristics since low electrical resistance is uniformly maintained throughout the entire negative electrode active layer even when charge and discharge cycles of a secondary battery are repeatedly performed, thereby suppressing degradation.

## Description

### [Technical Field]

The present disclosure relates to a negative electrode for a lithium secondary battery and a manufacturing method thereof.

This application claims the benefit of priority from Korean Patent Application No. 10-2024-0097817, filed on July 24, 2024, and Korean Patent Application No. 10-2025-0013944, filed on February 04, 2025, the entire contents disclosed therein are incorporated by reference into this disclosure.

### [Background]

Lithium secondary batteries have been widely applied not only to small devices such as portable electronic devices but also to medium and large-sized devices such as battery packs for hybrid vehicles or electric vehicles, and power storage devices. As interest in environmental issues has recently grown, the demand base for high-capacity batteries is expanding due to the growth of the market for high-capacity battery-employing devices such as electric vehicles and hybrid electric vehicles, which can replace vehicles using fossil fuels such as gasoline vehicles and diesel vehicles, which are one of the main causes of air pollution.

A lithium secondary battery is a power generation element capable of charge and discharge, which has a stacked structure of positive electrode/separator/negative electrode. When a lithium secondary battery is charged, a lithium deintercalation reaction is induced in which lithium contained in the positive electrode active material is oxidized and released at the positive electrode inside the battery, and a lithium insertion reaction occurs in which lithium is reduced and enters the negative electrode active material at the negative electrode. Generally, since the deintercalation reaction in the positive electrode active material is faster than the insertion reaction in the negative electrode active material, performance such as speed during charge and discharge of the lithium secondary battery is mainly determined by the negative electrode.

Materials including graphite are widely used as the negative electrode active material of the negative electrode. An average potential when materials including graphite release lithium is about 0.2 V (based on Li/Li⁺), and the discharge potential exhibits a relatively flat aspect. Due to this, when graphite is used as a negative electrode active material, the voltage of the secondary battery has the advantages of being high and constant. However, the electrical capacity per unit mass of the graphite material is as small as 372 mAh/g. On the other hand, since the capacity of the graphite material has currently been improved close to the theoretical capacity, additional capacity increase is difficult. In addition, when graphite is used as the negative electrode active material, there is a limitation that rapid charging performance is low compared to the case of applying other negative electrode active materials because the insertion reaction of lithium ions proceeds at a slow speed.

In order to increase the capacity and improve rapid charging performance of lithium secondary batteries, various negative electrode active materials are being studied. As an example thereof, it has become known that silicon can reversibly adsorb and release a large amount of lithium through a compound formation reaction with lithium, and many studies on this are being conducted recently. Since silicon has a theoretical maximum capacity of about 4020 mAh/g (9800 mAh/cc, specific gravity 2.23), which is very large compared to graphite-based materials, there is a useful advantage as a high energy density and/or high capacity negative electrode material. However, silicon not only induces a large volume change (~300%) of the negative electrode when charging the lithium secondary battery, but also the high-rate discharge characteristics are not high. In addition, silicon-based compounds applicable as negative electrode active materials excluding pure silicon (Si), that is, silicon oxides such as silicon carbide (SiC), SiO, or SiO₂ have high electrical resistance at temperature conditions performed during charge and discharge of the secondary battery and may act as a resistor. This promotes degradation of the negative electrode active layer as the cycle of the secondary battery progresses, so there is a limitation that the lifespan characteristics of the negative electrode are significantly reduced.

Therefore, there is a demand for the development of technology for a negative electrode for a lithium secondary battery with excellent rapid charging performance and improved lifespan characteristics.

### [Related Art Document]

Korean Patent Laid-Open Publication No. 10-2024-0084840

### [Summary]

### [Technical Problem]

An object of the present disclosure is to provide a negative electrode with excellent rapid charging performance and excellent lifespan characteristics, and a method of manufacturing the same.

### [Technical Solution]

The present disclosure provides a negative electrode including:
a negative electrode current collector;
a first negative electrode active layer provided on at least one surface of the negative electrode current collector and comprising a first carbon-based negative electrode active material; and
a second negative electrode active layer provided on the first negative electrode active layer and including a second carbon-based negative electrode active material and a silicon-based negative electrode active material;
wherein the entire negative electrode active layer comprising the first negative electrode active layer and the second negative electrode active layer has an electrical resistance deviation of 1.0 Ω or less between a point at a thickness ratio of 25±1% and a point at a thickness ratio of 75±1% based on a surface of the negative electrode active layer after 200 cycles of charge and discharge.

At this time, the silicon-based negative electrode active material may include one or more selected from silicon (Si), silicon carbide (SiC), a composite containing silicon (Si) and carbon (C), and silicon oxide (SiO_{q}, where 0.5≤q≤2.5).

The silicon-based negative electrode active material may be doped with one or more metals selected from Ni, Fe, Co, Ge, Li, Mg, Al, Ca, and Ti.

In addition, the silicon-based negative electrode active material may be included in an amount of 1 wt.% to 20 wt.% based on a weight of the entire negative electrode active layer.

Any one or more of the first carbon-based negative electrode active material and the second carbon-based negative electrode active material may further include graphite having a total pore volume in a range of 1 × 10⁻⁵ cm³/g to 1 × 10⁻¹ cm³/g.

A content of the graphite having a total pore volume in a range of 1 × 10⁻⁵ cm³/g to 1 × 10⁻¹ cm³/g may be 10 wt.% to 70 wt.% based on a total weight of the first carbon-based negative electrode active material or the second carbon-based negative electrode active material.

In addition, the first carbon-based negative electrode active material may include one or more selected from natural graphite, artificial graphite, Kish graphite, pyrolytic carbon, carbon microbeads, mesophase calcined carbon based on tar and pitch, and graphitized coke.

The entire negative electrode active layer may satisfy that a deviation between an average thickness measured at BOL and an average thickness measured at EOL of a lithium secondary battery is 30% or less based on the average thickness measured at BOL.

A tortuosity of the entire negative electrode active layer may be in a range of 2.5 to 7.0.

In addition, an average thickness of the entire negative electrode active layer may be in a range of 100 µm to 400 µm, and an average thickness of the second negative electrode active layer may have a ratio of 80% to 150% based on the average thickness of the first negative electrode active layer.

Furthermore, the present disclosure provides a method of manufacturing a negative electrode comprising:
coating a first negative electrode slurry including a first carbon-based negative electrode active material on at least one surface of a negative electrode current collector (S1);
coating a second negative electrode slurry including a second carbon-based negative electrode active material and a silicon-based negative electrode active material on the coated first negative electrode slurry (S2);
applying a magnetic field to the coated first negative electrode slurry and second negative electrode slurry (S3); and
drying the first negative electrode slurry and the second negative electrode slurry to which the magnetic field was applied to form a first negative electrode active layer and a second negative electrode active layer, respectively (S4);
wherein the entire negative electrode active layer including the first negative electrode active layer and the second negative electrode active layer has an electrical resistance deviation of 1.0 Ω or less between a point at a thickness ratio of 25±1% and a point at a thickness ratio of 75±1% based on a surface of the negative electrode active layer after 200 cycles of charge and discharge.

The silicon-based negative electrode active material may include one or more selected from silicon (Si), silicon carbide (SiC), a composite containing silicon (Si) and carbon (C), and silicon oxide (SiO_{q}, where 0.5≤q≤2.5).

Any one or more of the first carbon-based negative electrode active material and the second carbon-based negative electrode active material may include graphite having a total pore volume in a range of 1 × 10⁻⁵ cm³/g to 1 × 10⁻¹ cm³/g.

The magnetic field may be performed at a magnetic field strength of 1,000 G to 10,000 G.

### [Advantageous Effects]

The negative electrode according to the present disclosure includes a silicon-based negative electrode active material together with a carbon-based negative electrode active material, thereby having excellent charge and discharge capacity. In addition, since a magnetic field is applied during manufacturing to reduce the tortuosity of the entire negative electrode active layer, the negative electrode has excellent rapid charging performance. In addition, the negative electrode for a lithium secondary battery has an advantage of excellent lifespan characteristics because low electrical resistance is uniformly maintained throughout the entire negative electrode active layer even when charge and discharge cycles of the secondary battery are repeatedly performed, thereby suppressing degradation.

### [Brief Description of the Drawings]

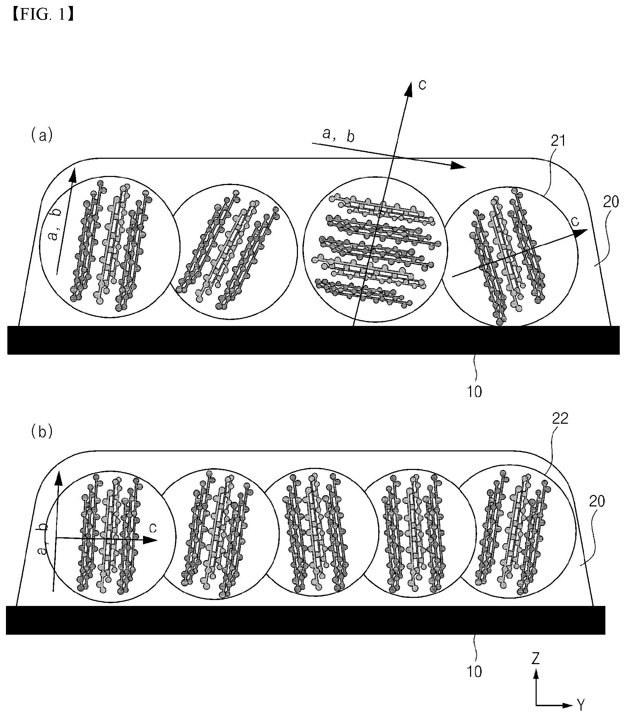

FIG. 1 is a cross-sectional view of a negative electrode schematically illustrating states of a-b axis crystal planes of a carbon-based negative electrode active material according to whether the carbon-based negative electrode active material is oriented, wherein (a) is a case where the carbon-based negative electrode active material is not oriented, and (b) is a case where the carbon-based negative electrode active material is oriented.

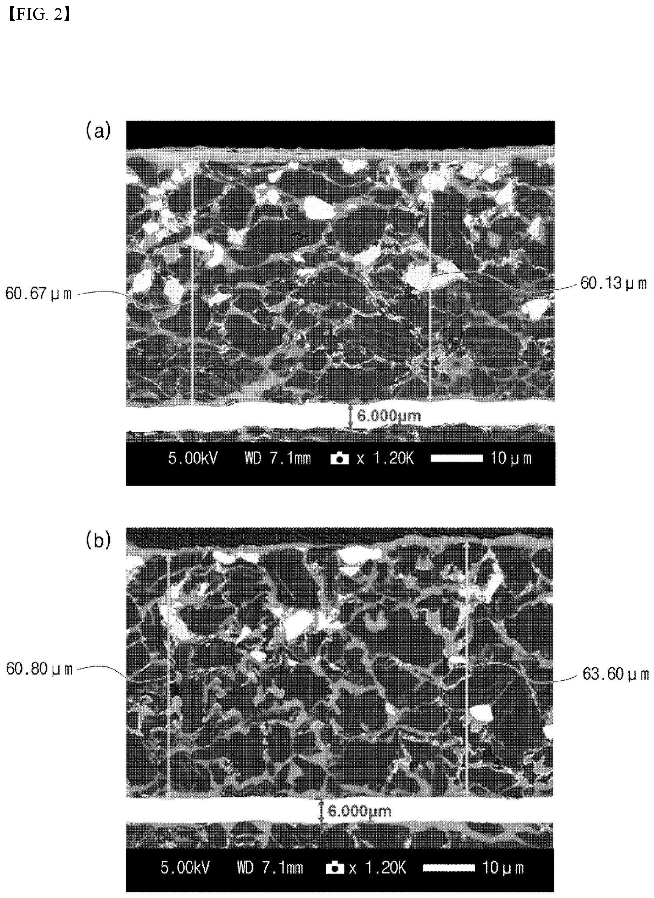

FIG. 2 illustrates images of a thickness direction cross-section of a negative electrode manufactured in Example 2 according to the present disclosure photographed by scanning electron microscopy (SEM), wherein (a) is a cross-section of a negative electrode active layer at BOL, and (b) is a cross-section of a negative electrode active layer at EOL.

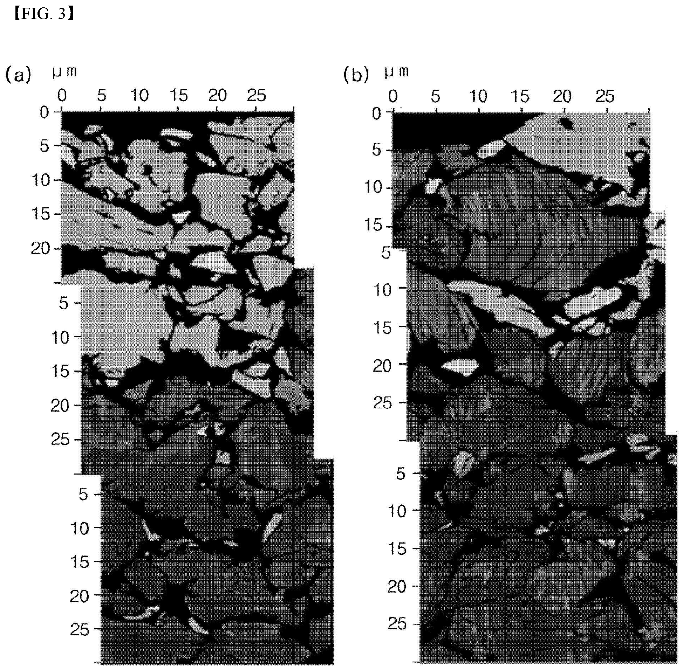

FIG. 3 illustrates images of a cross-section of a negative electrode active layer of a negative electrode manufactured according to the present disclosure photographed by diffusion resistance atomic microscopy, wherein (a) is a cross-section of a negative electrode active layer of Comparative Example 2, and (b) is a cross-section of a negative electrode active layer of Example 3.

### [Detailed Description]

The present disclosure may have various modifications and various embodiments, and specific embodiments will be described in detail in the following detailed description.

The terms "comprise," "include," and "have" used herein designate the presence of characteristics, numbers, steps, actions, components, or members described in the specification or a combination thereof, and it should be understood that the possibility of the presence or addition of one or more other characteristics, numbers, steps, actions, components, members, or a combination thereof is not excluded in advance.

In addition, in this specification, "average particle diameter (D₅₀)" means a particle diameter at which a cumulative value becomes 50% in a particle diameter distribution of particles, and is also referred to as median diameter. The average particle diameter can be measured by a method conventionally applied in the art. For example, the average particle diameter can be measured using an analyzer using a laser diffraction scattering particle size distribution measurement method.

In addition, in the present specification, "the carbon-based negative electrode active material is oriented" means that an a-b axis crystal plane of the carbon-based negative electrode active material constituting negative electrode active material particles is distributed to have a predetermined directionality with respect to the surface of the negative electrode current collector. This may be different from the carbon-based negative electrode active material particles themselves being arranged to have a specific direction inside the negative electrode active layer.

In addition, "the carbon-based negative electrode active material has high orientation" may mean that the carbon-based negative electrode active material contained in the negative electrode active layer is aligned with high frequency with respect to the surface of the negative electrode current collector, and in some cases, may mean that the carbon-based negative electrode active material contained in the negative electrode active layer is aligned at a high angle with respect to the surface of the negative electrode current collector.

Furthermore, in the present specification, "include as a main component" may mean including a defined component in an amount of 50 wt.% or more (or 50 vol.% or more), 60 wt.% or more (or 60 vol.% or more), 70 wt.% or more (or 70 vol.% or more), 80 wt.% or more (or 80 vol.% or more), 90 wt.% or more (or 90 vol.% or more), or 95 wt.% or more (or 95 vol.% or more) based on a total weight (or total volume). For example, "include a carbon-based negative electrode active material as a main component" may mean including 50 wt.% or more, 60 wt.% or more, 70 wt.% or more, 80 wt.% or more, 90 wt.% or more, or 95 wt.% or more based on a total of 100 parts by weight of the negative electrode active layer, the negative electrode active material, and/or the negative electrode slurry. In some cases, it may mean that the entire negative electrode active layer, the negative electrode active material, and/or the negative electrode slurry consists of the carbon-based negative electrode active material and is included in an amount of 100 wt.%.

Hereinafter, the present disclosure will be described in more detail.

### Negative Electrode

The present disclosure provides a negative electrode including:
a negative electrode current collector;
a first negative electrode active layer provided on at least one surface of the negative electrode current collector and including a first carbon-based negative electrode active material; and
a second negative electrode active layer provided on the first negative electrode active layer and including a second carbon-based negative electrode active material and a silicon-based negative electrode active material.

The negative electrode according to the present disclosure means a negative electrode for a lithium secondary battery. The negative electrode includes a negative electrode active layer on at least one surface of a negative electrode current collector. The negative electrode active layer is a layer that implements electrical activity of the negative electrode, and is manufactured by coating a negative electrode slurry including a negative electrode active material that implements an electrochemical oxidation-reduction reaction during charge and discharge of the battery on at least one surface of the negative electrode current collector, and then drying and rolling the same.

At this time, the negative electrode active layer has a two-layer structure in which a first negative electrode active layer and a second negative electrode active layer are sequentially stacked on the negative electrode current collector. The negative electrode active layer having the two-layer structure can easily control the composition of each layer. In this case, the performance of the negative electrode can be improved by controlling the type or content of components contained in each layer according to a specific purpose such as increasing energy efficiency of the battery or improving adhesion between the active layer and the current collector. For example, the negative electrode active layer may selectively include a silicon-based negative electrode active material having high charge and discharge capacity of the battery only in the second negative electrode active layer that is in contact with the positive electrode. In addition, the negative electrode active layer may selectively include natural graphite or the like having good adhesiveness as a negative electrode active material only in the first negative electrode active layer that is in contact with the negative electrode current collector, or may include a binder that imparts binding property of components constituting the active layer in a high content.

In the present disclosure, the first negative electrode active layer includes a first carbon-based negative electrode active material, and the second negative electrode active layer includes a second carbon-based negative electrode active material and a silicon-based negative electrode active material.

The carbon-based negative electrode active material means a material containing carbon atoms as a main component, and the first carbon-based negative electrode active material and the second carbon-based negative electrode active material included in each negative electrode active layer may be the same or different in type and/or content.

Specifically, the first carbon-based negative electrode active material and the second carbon-based negative electrode active material may include one or more selected from natural graphite, artificial graphite, Kish graphite, pyrolytic carbon, carbon microbeads, mesophase calcined carbon based on tar and pitch, and graphitized coke.

The carbon-based negative electrode active material may have a form of an assembly in which a plurality of particles is assembled. In this case, one graphite assembly may be formed by aggregating 2 to 100, preferably 3 to 20 graphite particles. The graphite particles may mean graphite crystal grains.

For example, the first carbon-based negative electrode active material may include natural graphite and artificial graphite. The artificial graphite may have the form of a graphite assembly in which 10 to 30 particles are aggregated. In addition, a mixing ratio of the natural graphite and the artificial graphite may be 5 to 50:50 to 95, or 30 to 49:51 to 70 based on weight. The first carbon-based negative electrode active material includes natural graphite and artificial graphite in the mixing ratio as described above, thereby solidifying adhesion between the negative electrode current collector and the negative electrode active layer, and maintaining low electrical resistance of the first negative electrode active layer even when charge and discharge cycles of the lithium secondary battery are performed, thereby having an advantage of excellent lifespan characteristics.

The second carbon-based negative electrode active material may include artificial graphite, and the artificial graphite may have a form of a graphite assembly in which 10 to 30 particles are aggregated. Artificial graphite has advantages of excellent high-rate charge and discharge performance and excellent lifespan characteristics compared to natural graphite.

Any one or more of the first carbon-based negative electrode active material and the second carbon-based negative electrode active material may further include low-swelling graphite. In the present disclosure, "low-swelling graphite" means graphite having low expansion characteristics during charging of the secondary battery. For example, when a secondary battery including graphite as a negative electrode active material of the negative electrode is manufactured, if expansion characteristics of the negative electrode active layer are low even after repeated charge and discharge cycles of the secondary battery, the corresponding graphite included in the secondary battery may be referred to as low-swelling graphite. The expansion characteristics of the low-swelling graphite can be known through a change in thickness of the negative electrode active layer according to charge and discharge cycles. Examples of such low-swelling graphite include low-swelling natural graphite and low-swelling artificial graphite.

In the present disclosure, the low-swelling graphite may be manufactured by a cold isotropic press (CIP) method that uniformly applies pressure in each direction of particles at a low temperature. The low-swelling graphite manufactured by the cold isotropic press method may be isotropic graphite. The isotropic graphite has low electrical resistance, resistance to thermal shock, and excellent mechanical properties, thereby improving lifespan characteristics of the negative electrode itself.

In addition, the low-swelling graphite may refer to natural graphite particles coated with carbon. In this case, the low-swelling graphite has a carbon layer, so that expansion of the graphite is suppressed during charging of the secondary battery, and there is an advantage that an amount of impurities generated due to physical damage during manufacturing of the carbon-based negative electrode active material and/or manufacturing of the negative electrode or battery assembly process using the same is significantly small.

The low-swelling graphite has a characteristic of high porosity inside the graphite particles. Specifically, the low-swelling graphite may satisfy a predetermined range of total pore volume. For example, the low-swelling graphite may have a total pore volume in a range of 1 × 10⁻⁵ cm³/g to 1 × 10⁻¹ cm³/g. The low-swelling graphite may have a total pore volume in a range of 5 × 10⁻⁴ cm³/g to 1 × 10⁻¹ cm³/g; 1 × 10⁻³ cm³/g to 1 × 10⁻¹ cm³/g; 5 × 10⁻³ cm³/g to 1 × 10⁻¹ cm³/g; 1 × 10⁻³ cm³/g to 5 × 10⁻² cm³/g; 1 × 10⁻³ cm³/g to 1 × 10⁻² cm³/g; 5 × 10⁻³ cm³/g to 5 × 10⁻² cm³/g; or 5 × 10⁻³ cm³/g to 2 × 10⁻² cm³/g. The total pore volume of the low-swelling graphite may be measured by a BET measurement method using adsorption of nitrogen (N2) gas. By satisfying the above-described range, the low-swelling graphite can improve volume expansion control ability of the negative electrode active material itself, thereby implementing small volume expansion characteristics during charging of the secondary battery. In addition, the low-swelling graphite satisfying the total pore volume in the above-described range can provide a path through which lithium ions and/or electrons can move inside the particles. Therefore, the low-swelling graphite can not only improve the charging speed of the secondary battery but also effectively suppress an increase in electrical resistance of the negative electrode active layer as the charge and discharge cycles of the secondary battery proceed.

When the first carbon-based negative electrode active material and/or the second carbon-based negative electrode active material includes low-swelling graphite, it may be included in a predetermined content ratio. Specifically, the low-swelling graphite may be included in a range of 10 wt.% to 70 wt.% based on the total weight of the first carbon-based negative electrode active material or the second carbon-based negative electrode active material. For example, the low-swelling graphite may be included in a range of 10 wt.% to 30 wt.%; 20 wt.% to 40 wt.%; 15 wt.% to 45 wt.%; 10 wt.% to 50 wt.%; 30 wt.% to 60 wt.%; 50 wt.% to 70 wt.%; 40 wt.% to 60 wt.%; 15 wt.% to 25 wt.%; or 45 wt.% to 69 wt.% based on the total weight of the first carbon-based negative electrode active material and/or the second carbon-based negative electrode active material.

When the first carbon-based negative electrode active material includes low-swelling graphite, the present disclosure can minimize volume change of the first negative electrode active layer during charge and discharge of the secondary battery by controlling the content of low-swelling graphite in the above-described range. Accordingly, adhesion between the negative electrode current collector and the first negative electrode active layer can be improved. In addition, since the low-swelling graphite controlled in the above-described content range can minimize volume change of the first negative electrode active layer during charge and discharge of the secondary battery, the negative electrode active material of the second negative electrode active layer can be firmly fixed. This can reduce movement of the carbon-based negative electrode active material generated as the cycle of the secondary battery proceeds, thereby preventing an increase in tortuosity of the second negative electrode active layer as the cycle proceeds and preventing reduction of orientation characteristics of the carbon-based negative electrode active material.

In addition, when the second carbon-based negative electrode active material includes low-swelling graphite, the present disclosure can improve electron movement and lithium movement by controlling the content of low-swelling graphite in the above-described range. Accordingly, charge and discharge capacity of the second negative electrode active layer adjacent to the positive electrode active layer can be implemented to be high, and volume expansion due to the silicon-based negative electrode active material included in the second negative electrode active layer during charging of the lithium secondary battery can be significantly reduced. In addition, an increase in tortuosity of the second negative electrode active layer can be suppressed until the lifespan of the lithium secondary battery is exhausted. The tortuosity of the negative electrode active layer is a parameter indirectly indicating the length of a path provided inside the negative electrode active layer so that electrolyte or the like can move from a surface of the negative electrode active layer to the negative electrode current collector. The lower the ratio of the tortuosity, the shorter the length of the path, and the shorter the tortuosity may be the same as the shorter the migration path of lithium ions and/or electrons during charge and discharge of the lithium secondary battery. However, in an actual lithium secondary battery, volume expansion of the negative electrode active material due to insertion of lithium ions during charging inevitably occurs, and repetitive volume change of the negative electrode active material due to charge and discharge may cause an increase in tortuosity inside the negative electrode active layer. The present disclosure can minimize expansion of the volume of the second negative electrode active layer by including low-swelling graphite as the second carbon-based negative electrode active material in a predetermined content in the second negative electrode active layer including the silicon-based negative electrode active material having large volume expansion during charging.

In the negative electrode according to the present disclosure, the first carbon-based negative electrode active material and the second carbon-based negative electrode active material included in the first negative electrode active layer and the second negative electrode active layer, respectively, may be oriented to have a predetermined directionality with respect to the surface of the negative electrode current collector.

The carbon-based negative electrode active material, specifically graphite, has a particle form in which crystal planes representing a two-dimensional planar structure composed of carbon atoms (i.e., a-b axis crystal planes of graphite) are stacked in a c-axis direction. If a separate treatment for orienting the a-b axis crystal planes of graphite is not performed when forming the negative electrode active layer including such graphite, the graphite 21 is included in a state in which the a-b axis crystal planes are not oriented with respect to the negative electrode current collector 10 as shown in FIG. 1(a). In this case, volume expansion of the negative electrode active layer 20 occurs in both a thickness direction (e.g., Z-axis direction) and a length direction (e.g., Y-axis direction) due to insertion of lithium ions during charging of the secondary battery.

However, the negative electrode of the present disclosure may include a carbon-based negative electrode active material 22 in which a-b axis crystal planes are oriented to have a predetermined angle with respect to a surface (a "black" portion in the drawing) of the negative electrode current collector 10 in the entire negative electrode active layer 20 as shown in FIG. 1(b). Here, the predetermined angle may mean a range of 30° or more, 45° or more, 60° or more, 70° or more, 70° to 90°, 80° to 90°, 65° to 85°, 70° to 85°, 30° to 60°, 45° to 70°, 45° to 90°, 60° to 90°, 60° to 80°, or 30° to 80° with respect to the surface of the negative electrode current collector 10. As such, the carbon-based negative electrode active material oriented with respect to the surface of the negative electrode current collector can significantly lower the tortuosity of the negative electrode active layer, thereby not only improving rapid charging performance of the negative electrode but also implementing low electrical resistance. In addition, the oriented carbon-based negative electrode active material imparts directionality during volume expansion of the negative electrode active layer due to lithium ion insertion. In other words, since the negative electrode active layer is implemented in the length direction (i.e., Y-axis direction) rather than the thickness direction (i.e., Z-axis direction), volume expansion in the thickness direction of the negative electrode active layer can be suppressed even if volume expansion due to insertion of lithium ions during charging repeatedly occurs. This has an advantage of improving degradation of the negative electrode because an increase in low electrical resistance of the negative electrode active layer can be prevented.

For example, the negative electrode according to the present disclosure may satisfy a condition that a deviation between an average thickness measured at BOL and an average thickness measured at EOL of a lithium secondary battery of the entire negative electrode active layer including the first negative electrode active layer and the second negative electrode active layer is 30% or less based on the average thickness measured at BOL.

"BOL" of a lithium secondary battery is an abbreviation of "Birth Of Life" and indicates an activated state after the lithium secondary battery is manufactured. In addition, "EOL" of a lithium secondary battery is an abbreviation of "End Of Life" and indicates a state in which the lifespan of the lithium secondary battery is determined to be exhausted. Here, a criterion for determining that the lifespan of the lithium secondary battery is exhausted may be a capacity of 70% or less based on the capacity of the lithium secondary battery at "BOL" of the lithium secondary battery, and in this case, capacity measurement conditions of the lithium secondary battery at BOL and capacity measurement conditions of the lithium secondary battery at EOL must be the same. The capacity measurement conditions may include C-rate conditions, voltage conditions, current conditions, and the like.

The condition is a parameter indicating a degree of volume expansion of the negative electrode active layer. The condition can determine a degree of change in average thickness of the entire negative electrode active layer through a deviation between the average thickness of the entire negative electrode active layer measured in a charged state at BOL indicating an early lifespan of the lithium secondary battery and the average thickness of the entire negative electrode active layer measured in a charged state at EOL indicating an end of lifespan. Although the negative electrode according to the present disclosure includes a silicon-based negative electrode active material having large volume expansion during charging in the second negative electrode active layer, volume expansion in the thickness direction of the negative electrode active layer due to insertion of lithium ions is suppressed. Therefore, the negative electrode can satisfy a condition in a range of 30% or less because volume expansion in the thickness direction of the entire negative electrode active layer is improved. For example, the negative electrode may satisfy the condition in a range of 0.01% to 30%; 0.01% to 25%; 0.01% to 20%; 0.01% to 15%; 1% to 30%; 5% to 30%; 10% to 30%; 15% to 30%; 20% to 30%; 24% to 29%; 24% to 27%; 22% to 28%; 0.01% to 10%; 0.01% to 8%; 0.01% to 6%; 0.01% to 4%; 0.01% to 2%; 0.1% to 9%; 0.5% to 5%; 1% to 5%; 2% to 7%; or 0.5% to 4%.

The negative electrode may satisfy a predetermined range of tortuosity of the entire negative electrode active layer measured in a charged state at BOL indicating an early lifespan of the lithium secondary battery because a-b axis crystal planes of the first carbon-based negative electrode active material and the second carbon-based negative electrode active material are oriented with respect to the surface of the negative electrode current collector. Specifically, the entire negative electrode active layer of the negative electrode may have a tortuosity in a range of 2.5 to 7.0. For example, the entire negative electrode active layer of the negative electrode may have a tortuosity in a range of 2.5 to 6.0; 2.5 to 5.5; 2.5 to 5.0; 3.0 to 7.0; 3.5 to 7.0; 4.0 to 7.0; 4.5 to 7.0; 3.0 to 6.0; 3.1 to 5.5; 3.5 to 5.0; or 3.3 to 4.6. The present disclosure can implement low electrical resistance of the negative electrode active layer by controlling the tortuosity of the entire negative electrode active layer to the above-described range. Through this, the negative electrode according to the present disclosure can not only improve charge and discharge capacity but also significantly improve rapid charging performance.

Furthermore, the negative electrode according to the present disclosure can uniformly maintain low electrical resistance of the entire negative electrode active layer by implementing low tortuosity of the entire negative electrode active layer and suppressing volume expansion in the thickness direction of the negative electrode active layer due to charge and discharge. Therefore, even if the negative electrode partially includes a silicon-based negative electrode active material having large electrical resistance, degradation of the entire negative electrode active layer may appear uniformly.

For example, an electrical resistance deviation between a point at a thickness ratio of 25±1% and a point at a thickness ratio of 75±1% based on a surface of the negative electrode active layer after 200 cycles of charge and discharge of the entire negative electrode active layer including the first negative electrode active layer and the second negative electrode active layer may be in a range of 1.0 Ω or less. Specifically, the electrical resistance deviation may be in a range of 0.1 Ω to 1.0 Ω; 0.1 Ω to 0.9 Ω; 0.1 Ω to 0.7 Ω; 0.1 Ω to 0.5 Ω; 0.5 Ω to 1.0 Ω; 0.7 Ω to 1.0 Ω; 0.3 Ω to 0.8 Ω; 0.2 Ω to 0.6 Ω; or 0.2 Ω to 0.4 Ω. The resistance in the thickness direction based on the surface of the entire negative electrode active layer may mean a vertical resistance measured by punching the entire negative electrode active layer along the thickness direction of the entire negative electrode active layer in a circle having a predetermined diameter and introducing a micrometer for resistance measurement into the punched entire negative electrode active layer. At this time, electrical resistance at a point at a thickness ratio of 25±1% and a point at a thickness ratio of 75±1% based on the surface of the second negative electrode active layer can be measured by controlling a depth at which the micrometer for resistance measurement is introduced.

A point at a thickness ratio of 25±1% and a point at a thickness ratio of 75±1% based on the surface in the entire negative electrode active layer are points located inside the first negative electrode active layer and the second negative electrode active layer, respectively, and the electrical resistance deviation indicates an electrical resistance deviation between the second negative electrode active layer including the silicon-based negative electrode active material and the first negative electrode active layer not including the silicon-based negative electrode active material. Therefore, the fact that the electrical resistance deviation between a point at a thickness ratio of 25±1% and a point at a thickness ratio of 75±1% based on the surface of the negative electrode active layer is 1.0 Ω or less means that the electrical resistance of the entire negative electrode active layer is uniformly maintained even after charge and discharge cycles of the lithium secondary battery are performed.

Silicon-based negative electrode active materials, particularly SiC or SiO_{q} (where 0.5≤q≤2.5), have high electrical resistance under conditions in which charge and discharge of the lithium secondary battery are normally performed, and thus may act as an electrical resistor. If the electrical resistance in the second negative electrode active layer increases due to such a silicon-based negative electrode active material, degradation of the corresponding point is promoted, thereby reducing lifespan characteristics of the negative electrode. However, the negative electrode according to the present disclosure can improve lifespan characteristics of the negative electrode by delaying rapid degradation of the second negative electrode active layer by maintaining a small deviation between the electrical resistance of the second negative electrode active layer including the silicon-based negative electrode active material and the electrical resistance of the first negative electrode active layer not including the silicon-based negative electrode active material as described above.

For example, after 200 cycles of charge and discharge, the negative electrode may have an average electrical resistance of the entire negative electrode active layer in a range of 1.0 Ω to 2.5 Ω. Specifically, after 200 cycles of charge and discharge, the negative electrode may have an average electrical resistance of the entire negative electrode active layer in a range of 1.0 Ω to 2.25 Ω; 1.0 Ω to 2.0 Ω; 1.0 Ω to 1.9 Ω; 1.0 Ω to 1.7 Ω; 1.0 Ω to 1.5 Ω; 1.25 Ω to 2.5 Ω; 1.5 Ω to 2.5 Ω; 2.0 Ω to 2.5 Ω; 1.1 Ω to 1.9 Ω; 1.2 Ω to 1.7 Ω; 1.4 Ω to 2.2 Ω; or 1.4 Ω to 1.8 Ω. The average electrical resistance of the entire negative electrode active layer may be the same as an average value of the electrical resistance of the first negative electrode active layer and the electrical resistance of the second negative electrode active layer, and may be measured in the same manner as the method of measuring the electrical resistance deviation described above.

Meanwhile, the first carbon-based negative electrode active material and the second carbon-based negative electrode active material may satisfy a predetermined range of average particle diameter. Specifically, the first carbon-based negative electrode active material and the second carbon-based negative electrode active material may each have an average particle diameter (D₅₀) in a range of 0.5 µm to 20 µm. For example, the first carbon-based negative electrode active material and the second carbon-based negative electrode active material may each have an average particle diameter (D₅₀) in a range of 0.5 µm to 15 µm; 0.5 µm to 10 µm; 5 µm to 20 µm; 10 µm to 20 µm;12 µm to 18 µm; 2 µm to 7 µm; 0.5 µm to 5 µm; or 11 µm to 15 µm.

The average particle diameter of the first carbon-based negative electrode active material and the second carbon-based negative electrode active material may be advantageous to make the particle diameter small in order to maximize the degree of disorder in the expansion direction for each of the particles so as to prevent expansion of particles due to charging of lithium ions. However, when the particle diameter of the first carbon-based negative electrode active material and the second carbon-based negative electrode active material is less than 0.5 µm, a large amount of binder may be required due to an increase in the number of particles per unit volume. On the other hand, if the maximum particle diameter exceeds 20 µm, expansion becomes severe, and as charge and discharge are repeated, binding property between particles and binding property between particles and the current collector may deteriorate, thereby significantly reducing cycle characteristics.

The second negative electrode active layer includes a silicon-based negative electrode active material. The silicon-based negative electrode active material is a material containing silicon (Si) as a main component and can increase charge and discharge capacity of the negative electrode. Examples of such silicon-based negative electrode active materials include silicon (Si), silicon carbide (SiC), a composite containing silicon (Si) and carbon (C), silicon oxide (SiO_{q}) such as silicon monoxide (SiO) and silicon dioxide (SiO₂), and these may be included in the negative electrode active layer alone or in combination.

When silicon monoxide (SiO) and silicon dioxide (SiO₂) are uniformly mixed or composited as the silicon-based negative electrode active material and included in the negative electrode active layer, they may be expressed as silicon oxide (SiO_{q}, where 0.5≤q≤2.5).

In addition, among the silicon-based negative electrode active materials, the composite is a material containing silicon (Si) and carbon (C) as main components, and may mean that silicon (Si), silicon carbide (SiC), silicon oxide (SiO_{q}), or the like is composited with carbon (C). For example, the composite may have a core-shell structure in which carbon (C) is coated on the surface of particles including silicon (Si), silicon carbide (SiC), silicon oxide (SiO_{q}), or the like. At this time, the carbon (C) may be deposited on the surface of the particles including silicon (Si), silicon carbide (SiC), silicon oxide (SiO_{q}), or the like through CVD, PVD, ALD, or the like; or may have a form of modifying the surface of the particles using plasma or UV. In addition, the composite may have a form of uniformly mixed/pulverized composite particles by applying mechanical and/or physical force to a mixture of particles including silicon (Si), silicon carbide (SiC), silicon oxide (SiO_{q}), or the like and particles composed of carbon (C). In this case, unlike an alloy in which silicon (Si) atoms and carbon (C) atoms are physicochemically bonded, the composite may mean that particles including silicon (Si) component and particles composed of carbon (C) are uniformly bonded while maintaining the original components.

These may be included in the second negative electrode active layer alone or in combination. For example, the silicon-based negative electrode active material may include one or more of SiC and SiO_{q}. The SiC or SiO_{q} has an advantage that volume expansion during charging of the lithium secondary battery is relatively small compared to a case of using pure silicon particles. However, SiC has high electrical resistance at temperatures of 500°C or lower and acts as a resistor. In addition, SiO_{q}, that is, silicon oxide, has contradictory characteristics in that battery efficiency decreases as the content of oxygen atoms increases due to an increase in electrical resistance, and lifespan decreases as the content of oxygen atoms decreases. As such, the silicon-based negative electrode active material having increased electrical resistance promotes degradation of the negative electrode active layer as the cycle of the lithium secondary battery proceeds, thereby significantly reducing lifespan characteristics of the negative electrode. However, the negative electrode according to the present disclosure can uniformly implement low electrical resistance in the entire negative electrode active layer by maintaining low tortuosity of the entire negative electrode active layer even after charge and discharge cycles of the lithium secondary battery are performed.

The silicon-based negative electrode active material may be doped or alloyed with Ni, Fe, Co, Ge, Li, Mg, Al, Ca, Ti, or the like. One or more of the metals may be doped or alloyed in the silicon-based negative electrode active material. In this case, the silicon-based negative electrode active material may be doped or alloyed with 1 mol% to 10 mol%, specifically 1 mol% to 5 mol% of metal with respect to silicon atoms. When the silicon-based negative electrode active material is added with metal in the form of doping or alloy, electrical conductivity may be increased and mechanical strength may be improved. However, since the metals have a higher atomic weight than silicon atoms, energy density per unit weight may decrease as the content ratio increases. Therefore, the metals may be doped or alloyed in the silicon-based negative electrode active material in the above-described content in order to lower electrical resistance without reducing energy density per unit weight of the silicon-based negative electrode active material.

The silicon-based negative electrode active material may be surface-treated with a carbon coating layer or the like on the surface, or may be complexed with carbon atoms for the purpose of suppressing volume expansion during charging of the secondary battery and improving electrical conductivity of the negative electrode active material.

The silicon-based negative electrode active material may be included in an amount of 0.1 wt.% to 30 wt.% based on the weight of the entire negative electrode active layer. Specifically, the silicon-based negative electrode active material may be included in an amount of 0.1 wt.% to 25 wt.%, 20 wt.% to 30 wt.%, 10 wt.% to 30 wt.%, 0.5 wt.% to 20 wt.%, 1 wt.% to 9 wt.%, 5 wt.% to 15 wt.%, 3 wt.% to 7 wt.%, 11 wt.% to 19 wt.%, 13 wt.% to 17 wt.%, 15 wt.% to 20 wt.%, or 8 wt.% to 13 wt.% based on the weight of the entire negative electrode active layer. The present disclosure can improve charge capacity per unit mass while reducing lithium consumption and irreversible capacity loss during initial charge and discharge of the secondary battery by controlling a content ratio of the silicon-based negative electrode active material to the above-described range. In addition, lifespan of the secondary battery can be increased because structural stability of the negative electrode active layer can be improved by minimizing volume change of the negative electrode active layer during charge and discharge of the secondary battery.

Furthermore, the first negative electrode active layer and the second negative electrode active layer may selectively further include a conductive material, a binder, other additives, and the like together with the negative electrode active material as a main component, if necessary.

The conductive material may include one or more selected from carbon black such as acetylene black, furnace black, lamp black, and thermal black; graphene; carbon nanotubes; and carbon fibers, but is not limited thereto.

For example, the negative electrode active layer may contain carbon black, carbon nanotubes, carbon fibers, or the like alone or in combination as a conductive material.

In addition, the content of the conductive material may be 0.1 to 10 parts by weight based on 100 parts by weight of each negative electrode active layer. Specifically, the conductive material may be 0.1 to 8 parts by weight, 0.1 to 5 parts by weight, 0.1 to 3 parts by weight, 2 to 6 parts by weight, or 0.5 to 2 parts by weight based on 100 parts by weight of the entire negative electrode active layer. The present disclosure can prevent charge capacity from being reduced due to an increase in resistance of the negative electrode due to a low content of the conductive material by controlling the content of the conductive material to the above-described range. In addition, the present disclosure can prevent a problem in which charge capacity is reduced due to a decrease in content of the negative electrode active material due to an excessive amount of the conductive material exceeding the above-described range or electrical resistance is increased due to an increase in loading amount of the negative electrode active layer.

The binder is a component that assists in bonding the negative electrode active material and the conductive material and bonding to the current collector, and may be appropriately applied within a range that does not reduce the electrical properties of the negative electrode. For example, the binder may include one or more selected from vinylidenefluoride-hexafluoropropylene copolymer (PVDF-co-HFP), polyvinylidenefluoride (PVdF), polyacrylonitrile, polymethylmethacrylate, polyvinyl alcohol, carboxymethylcellulose (CMC), starch, hydroxypropylcellulose, regenerated cellulose, polyvinyl pyrrolidone, polytetrafluoroethylene, polyethylene, polypropylene, polyacrylic acid, ethylene-propylene-diene monomer, sulfonated ethylene-propylene-diene monomer, styrene butadiene rubber (SBR), and fluorine rubber.

The content of the binder may be 0.1 parts by weight to 10 parts by weight based on 100 parts by weight of each negative electrode active layer. Specifically, the binder may be 0.1 parts by weight to 8 parts by weight, 0.1 parts by weight to 5 parts by weight, 0.1 parts by weight to 3 parts by weight, or 2 parts by weight to 6 parts by weight based on 100 parts by weight of each negative electrode active layer. The present disclosure can prevent adhesion of the active layer from being reduced due to a low content of the binder or the electrical properties of the negative electrode from being reduced due to an excessive amount of the binder by controlling the content of the binder contained in the negative electrode active layer to the above-described range.

The negative electrode active layer may have a predetermined average thickness in order to implement high charge and discharge capacity and fast charging speed. The negative electrode active layer exhibits larger charge and discharge capacity as a loading amount of the negative electrode active material exhibiting electrochemical activity increases. However, in this case, since it is difficult to orient a-b axis crystal planes of the carbon-based negative electrode active material to have a predetermined inclination with respect to the negative electrode current collector, there is a limitation in that rapid charging performance of the manufactured negative electrode is low. In order to overcome this, the present disclosure can control an average thickness of the entire negative electrode active layer to a predetermined range. Specifically, the entire negative electrode active layer may have an average thickness in a range of 100 µm to 400 µm. For example, the entire negative electrode active layer may have an average thickness in a range of 100 µm to 350 µm; 100 µm to 300 µm; 100 µm to 250 µm; 100 µm to 200 µm; 150 µm to 400 µm; 200 µm to 400 µm; 150 µm to 300 µm; 150 µm to 250 µm; or 150 µm to 220 µm. The present disclosure can prevent orientation of the carbon-based negative electrode active material from not being sufficiently implemented because the average thickness of the negative electrode active layer exceeds the upper limit value of the above-described range by controlling the average thickness range of the negative electrode active layer to the above-described range. In addition, charge and discharge capacity and energy density of the negative electrode can be prevented from being lowered due to a thickness thinner than the lower limit value of the above-described range by controlling the average thickness of the negative electrode active layer to the above-described range.

In addition, the first negative electrode active layer and the second negative electrode active layer may have a predetermined thickness ratio. Specifically, the second negative electrode active layer may have a thickness ratio of 80% to 150% based on the average thickness of the first negative electrode active layer. For example, the second negative electrode active layer may have a ratio in a range of 80% to 120%; 80% to 100%; 80% to 99%; 100% to 150%; 125% to 150%; 90% to 120%; 110% to 140%; or 95% to 105% based on the average thickness of the first negative electrode active layer.

The present disclosure can prevent an effect of improving rapid charging performance from becoming insignificant because orientation of the first carbon-based negative electrode active material is not sufficiently implemented due to an average thickness ratio of the first negative electrode active layer lower than the lower limit value of the above-described range by controlling the thickness ratio of the first negative electrode active layer and the second negative electrode active layer to the above-described range. In addition, charge and discharge capacity and rapid charging performance of the negative electrode can be prevented from being reduced due to an average thickness ratio of the first negative electrode active layer higher than the upper limit value of the above-described range.

The negative electrode current collector is not particularly limited as long as it has high conductivity without causing chemical changes in the battery. For example, the negative electrode current collector may use a thin plate or film including copper, stainless steel, nickel, titanium, calcined carbon, or the like. In the case of copper or stainless steel, surface-treated with carbon, nickel, titanium, silver, or the like may be used. In addition, an average thickness of the negative electrode current collector may be appropriately applied in a range of 1 µm to 500 µm in consideration of conductivity and total thickness of the manufactured negative electrode.

The negative electrode according to the present disclosure has the above-described configuration, thereby having excellent charge and discharge capacity, and because a migration path of lithium ions in the negative electrode active layer is shortened and diffusion resistance of lithium ions is significantly low, rapid charging performance of the negative electrode is excellent. In addition, the negative electrode has an advantage of excellent lifespan characteristics because low electrical resistance is uniformly maintained in the entire negative electrode active layer and degradation is suppressed even when charge and discharge cycles of the secondary battery are repeatedly performed.

### Lithium Secondary Battery

In addition, the present disclosure provides a lithium secondary battery including an electrode assembly including a positive electrode, the negative electrode of the present disclosure described above, and a separator disposed between the positive electrode and the negative electrode.

The lithium secondary battery according to the present disclosure includes an electrode assembly having a structure in which a plurality of positive electrodes and a plurality of negative electrodes are alternately disposed, and a separator is positioned therebetween. The lithium secondary battery includes the negative electrode of the present disclosure described above, thereby having advantages of excellent energy density and rapid charging performance as well as excellent lifespan characteristics because lithium-ion diffusion ability is improved.

At this time, since the negative electrode has the same configuration as the above-described configuration, a detailed description thereof will be omitted.

The positive electrode includes a positive electrode active layer including a positive electrode active material on a positive electrode current collector, and the positive electrode active layer may selectively further include a conductive material, a binder, other additives, and the like, if necessary.

The positive electrode active material is a material that can cause an electrochemical reaction on the positive electrode current collector, and may include one or more of lithium metal oxides represented by Chemical Formula 1 and Chemical Formula 2 below that are capable of reversible intercalation and deintercalation of lithium ions:

[Chemical Formula 1] Li₁[NiₘCoₙMn_{w}M¹ᵥ]O₂

[Chemical Formula 2] LiM²ₚMn_{q}PᵣO₄

In the above Chemical Formula 1 and Chemical Formula 2,
wherein M¹ is one or more elements selected from W, Cu, Fe, V, Cr, Ti, Zr, Zn, Al, In, Ta, Y, La, Sr, Ga, Sc, Gd, Sm, Ca, Ce, Nb, Mg, B, and Mo,
wherein 1, m, n, w, and v are 1.0≤1≤1.30, 0.5≤m<1, 0<n≤0.3, 0<w≤0.3, and 0≤v≤0.1, respectively, and m+n+w+v=1,
wherein M² is Ni, Co, or Fe,
wherein p is 0.05≤p≤1.0,
wherein q is 1-p or 2-p, and
wherein r is 0 or 1.

The lithium metal oxides represented by Chemical Formula 1 and Chemical Formula 2 are materials containing nickel (Ni) and manganese (Mn) in high content, respectively, and when used as a positive electrode active material, there is an advantage of stably supplying electricity of high capacity and/or high voltage compared to positive electrode active materials such as lithium iron phosphate oxide (LiFeO₄) conventionally used.

At this time, the lithium metal oxide represented by Chemical Formula 1 may include LiNi_{0.8}Co_{0.1}Mn_{0.1}O₂, LiNi_{0.6}Co_{0.2}Mn_{0.2}O₂, LiNi_{0.9}Co_{0.05}Mn_{0.05}O₂, LiNi_{0.6}Co_{0.2}Mn_{0.1}Al_{0.1}O₂, LiNi_{0.6}Co_{0.2}Mn_{0.15}Al_{0.05}O₂, LiNi_{0.7}Co_{0.1}Mn_{0.1}Al_{0.1}O₂ or the like. The lithium metal oxide represented by Chemical Formula 2 may include LiNi_{0.7}Mn_{1.3}O₄; LiNi_{0.5}Mn_{1.5}O₄; LiNi_{0.3}Mn_{1.7}O₄; or the like. The lithium metal oxides represented by Chemical Formula 1 and Chemical Formula 2 may be used alone or in combination.

In addition, the positive electrode active material may be included in an amount of 85 parts by weight or more based on 100 parts by weight of the positive electrode active layer. Specifically, the positive electrode active material may be included in an amount of 90 parts by weight or more, 93 parts by weight or more, or 95 parts by weight or more based on 100 parts by weight of the entire positive electrode active layer.

Meanwhile, the positive electrode active layer may further include a conductive material, a binder, other additives, and the like together with the positive electrode active material.

The conductive material is used to improve electrical performance of the positive electrode, and those commonly used in the art may be applied. Specifically, the conductive material may include one or more selected from natural graphite; artificial graphite; carbon black such as acetylene black, furnace black, lamp black, and thermal black; graphene; and carbon nanotubes.

The conductive material may be included in an amount of 0.1 to 5 parts by weight based on 100 parts by weight of each positive electrode active layer. Specifically, the conductive material may be included in an amount of 0.1 parts by weight to 4 parts by weight; 2 parts by weight to 4 parts by weight; 1.5 parts by weight to 5 parts by weight; 1 part by weight to 3 parts by weight; 0.1 parts by weight to 2 parts by weight; or 0.1 parts by weight to 1 part by weight based on 100 parts by weight of each positive electrode active layer.

In addition, the binder performs a role of binding the positive electrode active material, the positive electrode additive, and the conductive material to each other, and may be used without particular limitation as long as it has such a function. Specifically, the binder may include one or more resins selected from polyvinylidenefluoride-hexafluoropropylene copolymer (PVdF-co-HFP), polyvinylidenefluoride (PVdF), polyacrylonitrile, polymethylmethacrylate, and copolymers thereof. For example, the binder may include polyvinylidenefluoride.

The binder may be included in an amount of 1 part by weight to 10 parts by weight based on 100 parts by weight of each positive electrode active layer. Specifically, the binder may be included in an amount of 2 parts by weight to 8 parts by weight; or 1 part by weight to 5 parts by weight based on 100 parts by weight of the positive electrode active layer.

A total thickness of the positive electrode active layer is not particularly limited, but specifically may be in a range of 50 µm to 300 µm, and more specifically may be in a range of 100 µm to 200 µm; 80 µm to 150 µm; 120 µm to 170 µm; 150 µm to 300 µm; 200 µm to 300 µm; or 150 µm to 190 µm.

In addition, as the positive electrode current collector, those having high conductivity without causing chemical changes in the battery may be used. For example, a thin plate or film including stainless steel, aluminum, nickel, titanium, calcined carbon, or the like may be used, and when aluminum or stainless steel is included, surface-treated with carbon, nickel, titanium, silver, or the like may be used. In addition, an average thickness of the current collector may be appropriately applied in a range of 3 µm to 500 µm in consideration of conductivity and total thickness of the manufactured positive electrode.

The separator interposed between the positive electrode and the negative electrode of the lithium secondary battery is an insulating thin film having high ion permeability and mechanical strength, and is not particularly limited as long as it is commonly used in the art. Specifically, the separator may use one including one or more polymers selected from polypropylene having chemical resistance and hydrophobicity; polyethylene; and polyethylene-propylene copolymer. The separator may have a form of a porous polymer substrate such as a sheet or nonwoven fabric including the above-described polymer, and in some cases, may have a form of a composite separator in which organic or inorganic particles are coated on the porous polymer substrate by an organic binder. In addition, the separator may have an average diameter of pores of 0.01 µm to 10 µm and an average thickness of 5 µm to 300 µm.

The lithium secondary battery according to the present disclosure is not particularly limited, but may be a secondary battery in a form that may include a stack-type; zigzag-type; or zigzag-stack-type electrode assembly. For example, the lithium secondary battery according to the present disclosure may be a pouch-type secondary battery or a prismatic secondary battery.

The pouch-type secondary battery and/or the prismatic secondary battery have an advantage of high utilization in terms of energy density because unit cells of the secondary battery can be packed at high density in a limited space.

### Method of Manufacturing Negative Electrode

Furthermore, the present disclosure provides a method of manufacturing the negative electrode according to the present disclosure described above.

Specifically, the method of manufacturing a negative electrode according to the present disclosure includes coating a first negative electrode slurry including a first carbon-based negative electrode active material on at least one surface of a negative electrode current collector (S1), coating a second negative electrode slurry including a second carbon-based negative electrode active material and a silicon-based negative electrode active material on the first negative electrode slurry (S2), applying a magnetic field to the coated first negative electrode slurry and second negative electrode slurry (S3), and drying the first negative electrode slurry and the second negative electrode slurry to which the magnetic field was applied to form a first negative electrode active layer and a second negative electrode active layer, respectively (S4).

At this time, step (S1) and step (S2) refer to a process of coating by simultaneously or continuously discharging the first negative electrode slurry including the first carbon-based negative electrode active material and the second negative electrode slurry including the second carbon-based negative electrode active material on a surface of the moving negative electrode current collector. Accordingly, the first negative electrode slurry is coated on at least one surface of the negative electrode current collector, and the second negative electrode slurry is coated on the coated first negative electrode slurry.

Step (S1) and step (S2) are not particularly limited as long as they are methods commonly applied in the art, but preferably a die coating method may be used. The die coating method is performed using a slot die coater, and the slot die coater may be provided with a shim for controlling discharge conditions of the slurry. The slot die coater can easily control a loading amount, a coating thickness, and the like of the negative electrode slurry coated on the negative electrode current collector by controlling the shape or position of the shim.

For example, the present disclosure may simultaneously coat the first negative electrode slurry and the second negative electrode slurry on the negative electrode current collector using a dual die coater. In this case, there is an advantage of significantly increasing process efficiency compared to sequentially coating each slurry.

In addition, the first negative electrode slurry and the second negative electrode slurry include the first carbon-based negative electrode active material and the second carbon-based negative electrode active material as main components, respectively. Specifically, the first carbon-based negative electrode active material and the second carbon-based negative electrode active material may each include one or more selected from natural graphite, artificial graphite, Kish graphite, pyrolytic carbon, carbon microbeads, mesophase calcined carbon based on tar and pitch, and graphitized coke.

The first carbon-based negative electrode active material and the second carbon-based negative electrode active material may each have a form of an assembly in which a plurality of particles is assembled. In this case, one graphite assembly may be formed by aggregating 2 to 100, preferably 3 to 20 graphite particles.

For example, the first carbon-based negative electrode active material may include natural graphite and artificial graphite. The artificial graphite may have the form of a graphite assembly in which 10 to 30 particles are aggregated. In addition, a mixing ratio of the natural graphite and the artificial graphite may be 5 to 50:50 to 95, or 30 to 49:51 to 70 based on weight. The first carbon-based negative electrode active material includes natural graphite and artificial graphite in the mixing ratio as described above, thereby solidifying adhesion between the negative electrode current collector and the first negative electrode active layer, and maintaining low electrical resistance of the first negative electrode active layer even when charge and discharge cycles of the secondary battery are performed, thereby having an advantage of excellent lifespan characteristics.

In addition, the second carbon-based negative electrode active material may include artificial graphite, and the artificial graphite may have a form of a graphite assembly in which 10 to 30 particles are aggregated. Artificial graphite has advantages of excellent high-rate charge and discharge performance and excellent lifespan characteristics compared to natural graphite.

The first carbon-based negative electrode active material and/or the second carbon-based negative electrode active material may further include graphite. In the present disclosure, "graphite" means graphite having low expansion characteristics during charging of the secondary battery. For example, when a secondary battery including graphite as a negative electrode active material of the negative electrode is manufactured, if expansion characteristics of the negative electrode active layer are low even after repeating charge and discharge cycles of the secondary battery, the corresponding graphite included in the secondary battery may be referred to as graphite. Here, the expansion characteristics of the graphite can be known through a change in thickness of the negative electrode active layer according to charge and discharge cycles. Examples of such graphite include natural graphite and artificial graphite.

In the present disclosure, the graphite may be manufactured by spheroidizing plate-like natural graphite and then using a cold isotropic press (CIP) method that uniformly applies pressure in each direction of particles at a low temperature. The graphite manufactured by the cold isotropic press method may be isotropic graphite. The isotropic graphite has low electrical resistance, resistance to thermal shock, and excellent mechanical properties, thereby improving lifespan characteristics of the negative electrode itself.

The graphite may refer to natural graphite particles coated with carbon. In this case, the graphite has a carbon layer, so that expansion of the graphite is suppressed during charging of the secondary battery, and there is an advantage that an amount of impurities generated due to physical damage during manufacturing of the carbon-based negative electrode active material and/or manufacturing of the negative electrode or battery assembly process using the same is significantly small.

In addition, the graphite has a characteristic of high porosity inside the graphite particles. The graphite may satisfy a predetermined range of total pore volume, and specifically may have a total pore volume in a range of 1 × 10⁻⁵ cm³/g to 1 × 10⁻¹ cm³/g. For example, the graphite may have a total pore volume in a range of 5 × 10⁻⁴ cm³/g to 1 × 10⁻¹ cm³/g; 1 × 10⁻³ cm³/g to 1 × 10⁻¹ cm³/g; 5 × 10⁻³ cm³/g to 1 × 10⁻¹ cm³/g; 1 × 10⁻³ cm³/g to 5 × 10⁻² cm³/g; 1 × 10⁻³ cm³/g to 1 × 10⁻² cm³/g; 5 × 10⁻³ cm³/g to 5 × 10⁻² cm³/g; or 5 × 10⁻³ cm³/g to 2 × 10⁻² cm³/g. The total pore volume of the graphite may be measured by a BET measurement method using adsorption of nitrogen (N₂) gas. By satisfying the above-described range, the graphite can reduce volume change during charging of the secondary battery and lower diffusion resistance of lithium ions.

When the first carbon-based negative electrode active material and/or the second carbon-based negative electrode active material includes graphite, it may be included in a predetermined content ratio. Specifically, the graphite may be included in an amount of 10 wt.% or more to 70 wt.% or less based on a total weight of the first carbon-based negative electrode active material or the second carbon-based negative electrode active material. For example, the graphite may be included in an amount of 10 wt.% to 30 wt.%; 20 wt.% to 40 wt.%; 15 wt.% to 45 wt.%; 10 wt.% to 50 wt.%; 30 wt.% to 60 wt.%; 50 wt.% to 70 wt.%; 40 wt.% to 60 wt.%; 15 wt.% to 25 wt.%; or 45 wt.% to 69 wt.% based on the total weight of the first carbon-based negative electrode active material or the second carbon-based negative electrode active material.

In addition, the second negative electrode slurry includes a silicon-based negative electrode active material. The silicon-based negative electrode active material is a material containing silicon (Si) as a main component and can increase charge and discharge capacity of the negative electrode. Examples of such silicon-based negative electrode active materials include Si, SiC, SiO_{q} (where 0.5≤q≤2.5), and the like, and these may be included in the second negative electrode active layer alone or in combination. When silicon monoxide (SiO) and silicon dioxide (SiO₂) are uniformly mixed or composited as the silicon-based negative electrode active material and included in the negative electrode active layer, they may be expressed as silicon oxide (SiO_{q}, where 0.5 ≤ q≤2.5). In addition, SiC may mean silicon carbide, and in some cases, may mean a composite in which a carbon coating layer is formed on a surface of silicon particles or silicon particles and carbon particles are composited.

For example, the silicon-based negative electrode active material may include one or more of SiC and SiO_{q}.

The silicon-based negative electrode active material may be doped or alloyed with Ni, Fe, Co, Ge, Li, Mg, Al, Ca, Ti, or the like. At this time, one or more of the metals may be doped or alloyed in the silicon-based negative electrode active material. In this case, the silicon-based negative electrode active material may be doped or alloyed with 1 mol% to 10 mol%, specifically 1 mol% to 5 mol% of metal with respect to silicon atoms. When the silicon-based negative electrode active material is added with metal in the form of doping or alloy, electrical conductivity may be increased and mechanical strength may be improved. However, since the metals have a higher atomic weight than silicon atoms, energy density per unit weight may decrease as the content ratio increases. Therefore, the metals may be doped or alloyed in the silicon-based negative electrode active material in the above-described content in order to lower electrical resistance without reducing energy density per unit weight of the silicon-based negative electrode active material.

In addition, the silicon-based negative electrode active material may be included in an amount of 0.1 to 30 wt.% based on the weight of the entire negative electrode active layer. Specifically, the silicon-based negative electrode active material may be included in an amount of 0.1 to 25 wt.%, 20 to 30 wt.%, 10 to 30 wt.%, 0.5 to 20 wt.%, 1 to 9 wt.%, 5 to 15 wt.%, 3 to 7 wt.%, 11 to 19 wt.%, 13 to 17 wt.%, 15 to 20 wt.%, or 8 to 13 wt.% based on the weight of the entire negative electrode active layer. The present disclosure can improve charge capacity per unit mass while reducing lithium consumption and irreversible capacity loss during initial charge and discharge of the secondary battery by controlling a content ratio of the silicon-based negative electrode active material to the above-described range. In addition, lifespan of the secondary battery can be increased because structural stability of the negative electrode active layer can be improved by minimizing volume change of the negative electrode active layer during charge and discharge of the secondary battery.

The negative electrode slurry may further include a conductive material, a binder, an additive, and the like in addition to the negative electrode active material. Since each component included in the negative electrode slurry is the same as the negative electrode active layer of the negative electrode for a lithium secondary battery described above, a detailed description thereof will be omitted.

Meanwhile, step (S3) means a process of orienting a-b axis crystal planes of the carbon-based negative electrode active material included in the negative electrode slurry with respect to a surface of the negative electrode current collector by applying a magnetic field to the coated first negative electrode slurry and second negative electrode slurry after steps (S1 and S2).

A degree to which a-b axis crystal planes of the carbon-based negative electrode active material included in each negative electrode slurry are oriented may vary depending on the strength of the applied magnetic field. The magnetic field applied to each negative electrode slurry may have a strength in a range of 1,000 G to 10,000 G (Gauss) in order to increase the effect of orienting a-b axis crystal planes of the carbon-based negative electrode active material. Specifically, the magnetic field applied to the negative electrode slurry may be applied with a strength in a range of 1,000 G to 9,000 G; 1,000 G to 8,000 G; 2,000 G to 8,000 G; 3,000 G to 8,000 G; 5,000 G to 9,000 G; 5,000 G to 7,500 G; 5,500 G to 6,500 G; 1,000 G to 7,000 G; 2,000 G to 6,000 G; 1,500 G to 5,000 G; 1,500 G to 4,500 G; 4,000 G to 8,000 G; 4,500 G to 7,000 G; 3,000 G to 6,500 G; or 3,500 G to 6,500 G.

Accordingly, the first carbon-based negative electrode active material and the second carbon-based negative electrode active material may be oriented so that a-b axis crystal planes have a predetermined inclination with respect to the surface of the negative electrode current collector. This can be indirectly confirmed through X-ray diffraction analysis (XRD) or the like on the negative electrode active layer generated after drying each negative electrode slurry including the carbon-based negative electrode active material.

Step (S4) means a process of forming a negative electrode active layer by drying the negative electrode slurry to which the magnetic field was applied.

Drying is not particularly limited as long as it is a method that can be commonly applied in the art. For example, the drying may dry the negative electrode slurry by applying thermal energy to the negative electrode slurry using a hot air dryer, a vacuum oven, or the like.

After step (S4), a step (S5) of rolling the negative electrode active layer formed by drying may be further included. The rolling refers to a process of increasing density of the entire negative electrode active layer by applying pressure to the surface of the formed negative electrode active layer using a roll press or the like.

At this time, the rolling may manufacture a negative electrode having a final negative electrode active material layer formed on the current collector by rolling under linear pressure conditions for a target thickness and target porosity using a rolling equipment such as a roll-press, and then vacuum drying.

For example, the rolling may be performed under conditions in which a target thickness (i.e., an average thickness of the negative electrode active layer) is in a range of 100 µm to 400 µm and a target porosity (i.e., porosity) is in a range of 21% to 30%.

Specifically, the rolling may be performed at a temperature in a range of 20°C to 100°C, more specifically 20°C to 80°C; 20°C to 60°C; 20°C to 40°C; 20°C to 30°C; 30°C to 100°C; 40°C to 100°C; 60°C to 100°C; 75°C to 100°C; 85°C to 100°C; 50°C to 90°C; 60°C to 80°C; or 65°C to 90°C.

The rolling may be performed at a rolling speed in a range of 2 m/s to 7 m/s, and more specifically may be performed at a rolling speed in a range of 2 m/s to 6.5 m/s; 2 m/s to 6 m/s; 2 m/s to 5.5 m/s; 2 m/s to 5 m/s; 2 m/s to 4.5 m/s; 2 m/s to 4 m/s; 2.5 m/s to 4 m/s; 2.5 m/s to 3.5 m/s; 3.5 m/s to 5 m/s; 5 m/s to 7 m/s; 5.5 m/s to 6.5 m/s; or 6 m/s to 7 m/s.

The rolling may be performed under a pressure condition in a range of 50 MPa to 200 MPa, and specifically may be performed under a pressure condition in a range of 50 MPa to 150 MPa; 50 MPa to 100 MPa; 100 MPa to 200 MPa; 150 MPa to 200 MPa; or 80 MPa to 140 MPa.

In addition, the vacuum drying condition may be performed, for example, at 100°C to 150°C for 1 hour to 15 hours.

The present disclosure can maximize energy density of the negative electrode active layer while minimizing loss of orientation of the formed carbon-based negative electrode active material by performing rolling under the temperature, speed, and/or pressure conditions.

The negative electrode manufactured by the method of manufacturing a negative electrode according to the present disclosure can improve an increase in electrical resistance by suppressing volume change during charge and discharge of the second negative electrode active layer including the silicon-based negative electrode active material.

As an example thereof, the negative electrode manufactured by the manufacturing method may have an electrical resistance deviation of 1.0 Ω or less between a point at a thickness ratio of 25±1% and a point at a thickness ratio of 75±1% based on a surface of the entire negative electrode active layer including the first negative electrode active layer and the second negative electrode active layer after 200 cycles of charge and discharge.

The method of manufacturing a negative electrode according to the present disclosure has the above-described configuration, thereby manufacturing a negative electrode having excellent charge and discharge capacity and excellent rapid charging performance, and in which low electrical resistance is uniformly maintained in the entire negative electrode active layer and degradation is improved even when charge and discharge cycles of the secondary battery are repeatedly performed.

Hereinafter, the present disclosure will be described in more detail by Examples and Comparative Examples.

However, the following Examples and Comparative Examples are merely illustrative of the present disclosure, and the content of the present disclosure is not limited to the following Examples and Comparative Examples.

### Examples 1 to 7 and Comparative Examples 1 to 3. Manufacture of Negative Electrode

Natural graphite (average particle diameter (D₅₀): about 11 µm to 13 µm), artificial graphite (average particle diameter (D₅₀): about 15 µm to 16 µm), and graphite (average particle diameter (D₅₀): about 16 µm to 20 µm, total pore volume: about 0.006 cm³/g to 0.012 cm³/g) were prepared as carbon-based negative electrode active materials.

In addition, silicon monoxide (SiO, average particle diameter (D₅₀): about 6±0.5 µm) as a silicon-based negative electrode active material; styrene butadiene rubber (SBR) as a binder; and carboxymethylcellulose (CMC) as a thickening agent were prepared, and carbon nanotubes (CNT) and carbon black (Super-P) were prepared as conductive materials.

Then, a first negative electrode slurry was prepared by mixing 95 wt.% of the first carbon-based negative electrode active material, 1 wt.% of carbon black, 3.0 wt.% of styrene butadiene rubber (SBR), and 1 wt.% of carboxymethylcellulose (CMC) with water so that a solid content was 50%.

Separately, a second negative electrode slurry was prepared by mixing 95.55 wt.% of a mixture of the second carbon-based negative electrode active material and the silicon-based negative electrode active material, 1.13 wt.% of carboxymethylcellulose (CMC), 2.3 wt.% of styrene butadiene rubber (SBR), 0.02 wt.% of carbon nanotubes, and 1 wt.% of carbon black with water so that a solid content was 50%.

At this time, ① composition of the first carbon-based negative electrode active material, ② composition of the second carbon-based negative electrode active material, and ③ content ratio of the silicon-based negative electrode active material included in the second negative electrode slurry were controlled as shown in Table 1 below.

The manufactured negative electrode slurry was coated (S1 and S2) on a copper thin plate (thickness: 6 µm)being transferred by roll-to-roll transfer (transfer speed: 6 m/min) using a dual die coater. Thereafter, a magnetic field was applied (S3) for 9 seconds to 11 seconds at a lower portion of the coated negative electrode slurry using a magnet. ④ Whether to apply the magnetic field and ⑤ strength of the applied magnetic field were controlled as shown in Table 2 below.

The negative electrode slurry to which the magnetic field was applied was dried with hot air to form a negative electrode active layer on the negative electrode current collector (S4). A negative electrode (average thickness: about 135±5 µm)was manufactured (S5) by rolling with a roll press so that porosity of the negative electrode active layer was 25±2%. At this time, the thickness ratio of the first negative electrode active layer and the second negative electrode active layer was 1:1.

**[Table 1]**

| | Composition of First carbon-based negative electrode active material | Composition of Second carbon-based negative electrode active material | Silicon-based negative electrode active material content |
|---|---|---|---|
| Example 1 | Artificial graphite: Low-swelling natural graphite = 1:2 (wt.%/wt.%) | Artificial graphite = 100 wt.% | 12 wt.% |
| Example 2 | Artificial graphite: Low-swelling natural graphite = 1:1 (wt.%/wt.%) | Artificial graphite = 100 wt.% | 12 wt.% |
| Example 3 | Artificial graphite: Low-swelling natural graphite = 2:1 (wt.%/wt.%) | Artificial graphite = 100 wt.% | 12 wt.% |
| Example 4 | Artificial graphite: Natural graphite = 2:1(wt.%/wt.%) | Artificial graphite: Low-swelling natural graphite = 1:1 (wt.%/wt.%) | 12 wt.% |
| Example 5 | Artificial graphite: Natural graphite =2:1 (wt.%/wt.%) | Artificial graphite = 100 wt.% | 12 wt.% |
| Example 6 | Artificial graphite: Low-swelling natural graphite = 2:1 (wt.%/wt.%) | Artificial graphite = 100 wt.% | 30 wt.% |
| Example 7 | Artificial graphite: Low-swelling natural graphite = 2:1 (wt.%/wt.%) | Artificial graphite = 100 wt.% | 12 wt.% |
| Comparative Example 1 | Artificial graphite: Natural graphite =2:1 (wt.%/wt.%) | Artificial graphite = 100 wt.% | 12 wt.% |
| Comparative Example 2 | Artificial graphite: Low-swelling natural graphite = 2:1 (wt.%/wt.%) | Artificial graphite = 100 wt.% | 12 wt.% |
| Comparative Example 3 | Artificial graphite: Low-swelling natural graphite = 2:1 (wt.%/wt.%) | Artificial graphite= 100 wt.% | 12 wt.% |

**[Table 2]**

| | Whether magnetic field was applied | Magnetic field strength |
|---|---|---|
| Example 1 | O | 6,000±1,000 G |
| Example 2 | O | 6,000±1,000 G |
| Example 3 | O | 6,000±1,000 G |
| Example 4 | O | 6,000±1,000 G |
| Example 5 | O | 6,000±1,000 G |
| Example 6 | O | 6,000±1,000 G |
| Example 7 | O | 10,000±1,000 G |
| Comparative Example 1 | X | - |
| Comparative Example 2 | X | - |
| Comparative Example 3 | O | 1,000±100 G |

### Examples 8 to 14 and Comparative Examples 4 to 6. Manufacturing of Lithium Secondary Battery

LiNi_{0.7}Co_{0.1}Mn_{0.1}Al_{0.1}O₂ having a particle size of 5 µm was prepared as a positive electrode active material, and mixed with a carbon-based conductive material and polyvinylidene fluoride as a binder in N-methyl pyrrolidone (NMP) at a weight ratio of 94:3:3 to form a slurry. The slurry was cast on an aluminum thin plate, dried in a vacuum oven at 120°C, and then rolled to manufacture a positive electrode.

A separator made of polypropylene having a thickness of 18 µm was interposed between the obtained positive electrode and the negative electrodes manufactured in Examples 1 to 7 and Comparative Examples 1 to 3, respectively, inserted into a case, and then an electrolyte composition was injected to assemble a 1 Ah-class lithium secondary battery.

At this time, the type of negative electrode applied to each lithium secondary battery is shown in Table 3 below.

**[Table 3]**

| | Type of applied negative electrode |
|---|---|
| Example 8 | Negative electrode manufactured in Example 1 |
| Example 9 | Negative electrode manufactured in Example 2 |
| Example 10 | Negative electrode manufactured in Example 3 |
| Example 11 | Negative electrode manufactured in Example 4 |
| Example 12 | Negative electrode manufactured in Example 5 |
| Example 13 | Negative electrode manufactured in Example 6 |
| Example 14 | Negative electrode manufactured in Example 7 |
| Comparative Example 4 | Negative electrode manufactured in Comparative Example 1 |
| Comparative Example 5 | Negative electrode manufactured in Comparative Example 2 |
| Comparative Example 6 | Negative electrode manufactured in Comparative Example 3 |

### Experimental Example.

The following experiments were performed to evaluate the physical properties and performance of the negative electrode manufactured according to the present disclosure.

### 1) Measurement of tortuosity of entire negative electrode active layer

Two negative electrodes manufactured in each of Examples 1 to 7 and Comparative Examples 1 to 3 were prepared, and symmetric cells were fabricated by stacking in the order of separator/negative electrode/separator/negative electrode/separator. The fabricated symmetric cells were completely wetted by injecting an electrolyte solution, and mounted on an electrochemical impedance spectroscopy (EIS) device in a state of being fastened to a jig. Thereafter, impedance for a range of 300 kHz to 300 mHz was measured, and the measured data was fitted to calculate tortuosity. The calculated tortuosity is shown in Table 4.

### 2) Measurement of BOL→EOL average thickness deviation of entire negative electrode active layer

One of each prepared lithium secondary battery was charged at 22±3°C with a constant current of 1/3C until the voltage reached 4.35 V to measure the charging capacity. Then, the lithium secondary battery was disassembled to measure the average thickness of the entire negative electrode active layer at BOL.

At this time, for the average thickness of the entire negative electrode active layer, argon ion milling (Ar⁺ ion milling) was performed on a thickness direction cross-section of the entire negative electrode active layer under an acceleration voltage condition of 6 kV. Thereafter, scanning electron microscope (SEM) analysis of the ion-milled cross-section was performed under conditions of an acceleration voltage of 5 kV and a working distance of 7 mm, and the average thickness of the entire negative electrode active layer was calculated by measuring the thickness at three arbitrary points in the obtained image. The ion milling was performed with IM5000 from Hitachi, and the scanning electron microscope analysis was performed with IT800SHL from JEOL.

Thereafter, one cycle was set as charging at 22+3°C with a constant current of 1/3C until the voltage reached 4.35 V, and discharging with a constant current of 1/3C until the voltage reached 3.0 V. These charge and discharge cycles were repeatedly performed until reaching 70% or less based on the charging capacity at BOL of the lithium secondary battery. When the charging capacity reached 70% based on the charging capacity at BOL, the average thickness of the entire negative electrode active layer at EOL was measured by performing in the same manner as the method of measuring the average thickness of the entire negative electrode active layer described above.

The average thickness deviation was calculated from the average thickness of each entire negative electrode active layer measured at BOL and EOL, and the deviation rate based on the measured value at BOL was calculated from the calculated value. The results are shown in Table 4 below.

### 3) Measurement of vertical resistance of entire negative electrode active layer

Charge and discharge of 200 cycles were performed on the lithium secondary batteries manufactured in Examples 8 to 14 and Comparative Examples 4 to 6. At this time, one cycle was set as charging at 22±3°C with a constant current of 1/3C until the voltage reached 4.35 V, and discharging with a constant current of 1/3C until the voltage reached 3.0 V.

After transferring each lithium secondary battery subjected to 200 cycles of charge and discharge to a dry room, the negative electrode was separated, and the negative electrode active layer of the separated negative electrode was punched in a circle with a diameter of 2.5 cm along the thickness direction. A micrometer for resistance measurement was introduced into the punched entire negative electrode active layer to measure the vertical resistance of the entire negative electrode active layer.

In addition, the electrical resistance at each point was measured by adjusting the depth at which the micrometer for resistance measurement was introduced to be a point where the thickness ratio was 25±1% and a point where the thickness ratio was 75±1% based on the surface of the second negative electrode active layer. The deviation was calculated from the electrical resistance at the two measured points. The results are shown in Table 4 below.

Separately from this, argon ion milling (Ar⁺ ion milling) was performed on a thickness direction cross-section of the negative electrode manufactured in each of Comparative Example 2 and Example 3 under an acceleration voltage condition of 6 kV, and Scanning Spread Resistance Microscope (SSRM) analysis was performed on the ion-milled cross-section. The results are shown in FIG. 3, respectively.

### 4) Evaluation of rapid charging performance

A positive electrode was manufactured in the same manner as Examples 8 to 14 and Comparative Examples 4 to 6, and separately from this, a Li4Ti5O12 (LTO) electrode was prepared.

The prepared positive electrode and LTO electrode and the negative electrodes prepared in Examples 1 to 7 and Comparative Examples 1 to 3 were stacked so that a separator was interposed therebetween, and a three-electrode cell was fabricated by coating and assembling a copper wire on the stacked LTO electrode.

Charge and discharge between the positive electrode and the LTO electrode were performed so that the state of charge (SOC) of the LTO electrode became 50%, and the three-electrode cell was charged and adjusted to have a potential of 1.53 V.

Thereafter, charge and discharge of the three-electrode cell were performed while measuring the voltage of the positive electrode and the LTO electrode and the voltage between the positive electrode and the negative electrode using an EC-Lab charger-discharger. The charging was performed under constant current conditions of 0.5C, 1.0C, 1.5C, 2.0C, 2.5C, or 3.0C, respectively, and the charging time was calculated after confirming the depth of charge under each C-rate condition. In addition, for the depth of charge, the negative electrode voltage profile was confirmed, and when a plateau was confirmed in the negative electrode profile during charging, that point was determined as the charging capacity (depth of charge). The calculated charging time is shown in Table 5 below.

### 5) Measurement of energy density

The loading amount per unit area and porosity of the negative electrodes manufactured in Examples 1 to 7 and Comparative Examples 1 to 3 were measured.

The energy density of a large secondary battery cell was calculated using the measured loading amount per unit area and porosity. The large secondary battery cell was designed as a cell with a size of 99.7 mm × 301.5 mm × 8.2 mm that satisfies a discharge capacity of 40 Ah under a condition of 1/3C. The calculated values are shown in Table 5 below.

### 6) Lifespan characteristics

The charge and discharge capacity retention rate under room temperature conditions was measured for the lithium secondary batteries manufactured in Examples 8 to 14 and Comparative Examples 4 to 6. Specifically, one cycle was set as charging at 22±3°C with a constant current of 1/3C until the voltage reached 4.35 V, and discharging with a constant current of 1/3C until the voltage reached 3.0 V, and then 300 cycles of charge and discharge were performed on each lithium secondary battery.

At this time, the discharge capacity of the 1^{st} cycle and the discharge capacity of the 300^{th} cycle were measured during charge and discharge of each lithium secondary battery. The discharge capacity retention rate of the 300^{th} cycle based on the measured discharge capacity of the 1 ^{st} cycle was calculated to evaluate the discharge capacity retention rate of each lithium secondary battery. The results are shown in Table 5 below.

**[Table 4]**

| | BOL→EOL average thickness deviation rate | Tortuosity | Vertical electrical resistance [Ω] | Electrical resistance deviation at points with thickness ratio of 25±1% and 75±1% [Ω] |
|---|---|---|---|---|
| Example 8 | About 2.5% | 4.13 | 1.82 | 0.31 |
| Example 9 | About 2.7% | 4.17 | 1.85 | 0.33 |
| Example 10 | About 3.0% | 4.21 | 1.87 | 0.34 |
| Example 11 | About 4.3% | 4.45 | 1.89 | 0.48 |
| Example 12 | About 6.8% | 5.29 | 1.93 | 0.56 |
| Example 13 | About 18.1% | 6.32 | 1.94 | 0.90 |
| Example 14 | About 1.7% | 4.13 | 1.80 | 0.35 |
| Comparative Example 4 | About 106% | 8.89 | 2.08 | 1.47 |
| Comparative Example 5 | About 80.9% | 8.24 | 2.01 | 1.28 |
| Comparative Example 6 | About 10.5% | 7.42 | 1.95 | 1.06 |

**[Table 5]**

| | Rapid charging time [min] | Energy density [Wh/L] | 300^{th} cycle discharge capacity retention rate [%] |
|---|---|---|---|
| Example 8 | 27.4 | 597.4 | 86.4 |
| Example 9 | 27.2 | 597.3 | 86.0 |
| Example 10 | 27.1 | 597.5 | 84.4 |
| Example 11 | 28.6 | 595.1 | 81.6 |
| Example 12 | 28.9 | 595.8 | 82.1 |
| Example 13 | 31.1 | 620.4 | 80.2 |
| Example 14 | 28.7 | 600.2 | 81.3 |
| Comparative Example 4 | 42.1 | 595.5 | 71.2 |
| Comparative Example 5 | 38.0 | 581.0 | 83.6 |
| Comparative Example 6 | 35.9 | 587.7 | 78.9 |

As shown in the above Table 4 and Table 5, it can be seen that the negative electrode according to the present disclosure has excellent rapid charging performance and excellent energy density and lifespan characteristics.

Specifically, it was confirmed that the lithium secondary batteries manufactured in the Examples took about 31 minutes or less to charge to the depth of charge. In addition, the lithium secondary batteries manufactured in the Examples exhibited a high energy density of about 595 Wh/L or more, and it was confirmed that the discharge capacity retention rate was about 80% or more after 300 cycles of charge and discharge.

In addition, referring to FIG. 3(a), the negative electrode of Comparative Example 2, after 200 cycles, showed significantly different colors of the second negative electrode active layer including the silicon-based negative electrode active material (e.g., light gray) and the second negative electrode active layer not including the silicon-based negative electrode active material (e.g., dark gray) during scanning spread resistance microscope analysis of the entire negative electrode active layer. This means that degradation of the second negative electrode active layer including the silicon-based negative electrode active material is accelerated, thereby increasing the resistance of the second negative electrode active layer.

In contrast, referring to FIG. 3(b), the negative electrode of Example 3, after 200 cycles, showed uniform colors (e.g., dark gray) of the first negative electrode active layer and the second negative electrode active layer during scanning spread resistance microscope analysis of the entire negative electrode active layer. This means that degradation of the second negative electrode active layer is improved, thereby improving the increase in electrical resistance even when the cycle of the secondary battery proceeds.

From these results, it can be seen that even when including the silicon-based negative electrode active material having high electrical resistance, the electrical resistance of the negative electrode active layer can be implemented to be low, and since such low electrical resistance is maintained even when charge and discharge are repeatedly performed, the lifespan characteristics of the negative electrode are improved.

Therefore, the negative electrode according to the present disclosure has advantages of excellent rapid charging performance and excellent energy density and lifespan characteristics.

Therefore, it can be seen that the negative electrode according to the present disclosure has excellent rapid charging performance and energy density.

While the present disclosure has been described with reference to preferred embodiments of the present disclosure, it will be understood by those skilled in the art that various modifications and variations can be made therein without departing from the scope of the present disclosure as defined by the appended claims.

Therefore, the scope of the present disclosure should not be limited by the detailed description of the specification but should be determined by the appended claims.

### [Description of Reference Numerals]

10: negative electrode current collector
20: negative electrode active layer
21: non-aligned and/or non-oriented carbon-based negative electrode active material
22: aligned and/or oriented carbon-based negative electrode active material

## Claims

1. A negative electrode, comprising:
a negative electrode current collector;
a first negative electrode active layer provided on at least one surface of the negative electrode current collector and comprising a first carbon-based negative electrode active material; and
a second negative electrode active layer provided on the first negative electrode active layer and comprising a second carbon-based negative electrode active material and a silicon-based negative electrode active material;
wherein an average thickness of the second negative electrode active layer has a ratio of 80% to 150% based on an average thickness of the first negative electrode active layer; and
wherein the entire negative electrode active layer comprising the first negative electrode active layer and the second negative electrode active layer has an electrical resistance deviation of 1.0 Ω or less between a point at a thickness ratio of 25±1% and a point at a thickness ratio of 75±1% based on a surface of the negative electrode active layer after 200 cycles of charge and discharge.

2. The negative electrode of claim 1, wherein the silicon-based negative electrode active material comprises one or more selected from silicon (Si), silicon carbide (SiC), a composite containing silicon (Si) and carbon (C), and silicon oxide (SiO_{q}, where 0.5≤q≤2.5).

3. The negative electrode of claim 1, wherein the silicon-based negative electrode active material is doped with one or more metals selected from Ni, Fe, Co, Ge, Li, Mg, Al, Ca, and Ti.

4. The negative electrode of claim 1, wherein the silicon-based negative electrode active material is included in a range of 1 wt.% to 30 wt.% based on a weight of the entire negative electrode active layer.

5. The negative electrode of claim 1, wherein any one or more of the first carbon-based negative electrode active material and the second carbon-based negative electrode active material further comprises graphite having a total pore volume in a range of 1 × 10⁻⁵ cm³/g to 1 × 10⁻¹ cm³/g.

6. The negative electrode of claim 5, wherein a content of the graphite having a total pore volume in a range of 1 × 10⁻⁵ cm³/g to 1 × 10⁻¹ cm³/g is 10 wt.% to 70 wt.% based on a total weight of the first carbon-based negative electrode active material or the second carbon-based negative electrode active material.

7. The negative electrode of claim 1, wherein the first carbon-based negative electrode active material comprises one or more selected from natural graphite, artificial graphite, Kish graphite, pyrolytic carbon, carbon microbeads, mesophase calcined carbon based on tar and pitch, and graphitized coke.

8. The negative electrode of claim 1, wherein the entire negative electrode active layer has a deviation between an average thickness measured at BOL and an average thickness measured at EOL of a lithium secondary battery of 30% or less based on the average thickness measured at BOL.

9. The negative electrode of claim 1, wherein a tortuosity of the entire negative electrode active layer is in a range of 2.5 to 7.0.

10. The negative electrode of claim 1, wherein an average thickness of the entire negative electrode active layer is in a range of 100 µm to 400 µm.

11. A method of manufacturing a negative electrode, comprising:
coating a first negative electrode slurry comprising a first carbon-based negative electrode active material on at least one surface of a negative electrode current collector (S1);
coating a second negative electrode slurry comprising a second carbon-based negative electrode active material and a silicon-based negative electrode active material on the coated first negative electrode slurry (S2);
applying a magnetic field to the coated first negative electrode slurry and second negative electrode slurry (S3); and
drying the first negative electrode slurry and the second negative electrode slurry to which the magnetic field was applied to form a first negative electrode active layer and a second negative electrode active layer, respectively (S4);
wherein an average thickness of the second negative electrode active layer has a ratio of 80% to 150% based on an average thickness of the first negative electrode active layer;
wherein the entire negative electrode active layer comprising the first negative electrode active layer and the second negative electrode active layer has an electrical resistance deviation of 1.0 Ω or less between a point at a thickness ratio of 25±1% and a point at a thickness ratio of 75±1% based on a surface of the negative electrode active layer after 200 cycles of charge and discharge.

12. The method of manufacturing the negative electrode of claim 11, wherein the silicon-based negative electrode active material comprises one or more selected from silicon (Si), silicon carbide (SiC), a composite containing silicon (Si) and carbon (C), and silicon oxide (SiO_{q}, where 0.5≤q≤2.5).

13. The method of manufacturing the negative electrode of claim 11, wherein any one or more of the first carbon-based negative electrode active material and the second carbon-based negative electrode active material comprises graphite having a total pore volume in a range of 1 × 10⁻⁵ cm³/g to 1 × 10⁻¹ cm³/g.

14. The method of manufacturing the negative electrode of claim 11, wherein the magnetic field is performed at a magnetic field strength of 1,000 G to 10,000 G.
